# EUROPEAN PATENT APPLICATION

(11) **EP 0 032 625 A2**
(43) Date of publication of application: **29.07.1981**
(21) Application number: 80304601.0
(22) Date of filing: 18.12.1980
(51) Int. Cl.: C09B 29/52, D06P 3/06

(54) **Water-soluble monoazo dyes**

(30) Priority: 17.01.1980 GB 8001533
(71) Applicant: IMPERIAL CHEMICAL INDUSTRIES PLC, London SW1P 3JF (GB)
(72) Inventor: Herbert, John Albert Leslie, Bury, Lancs. (GB); Hutchings, Michael Gordon, D-8000 München 40 (DE); Meyrick, Barry Huston, Greater Manchester (GB)
(74) Representative: Stephenson, Kenneth

(57) **Abstract**

Water soluble monoazo dyes which, in the form of the free acids, have the formula: 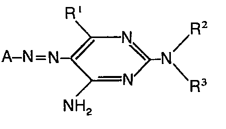 wherein A represents the residue of a diazo component of the benzene series containing a single sulphonic acid group and optionally one or more other substituents, R' represents hydrogen or lower alkyl and each of R² and R³ independently represents hydrogen, optionally substituted alkyl or phenyl, or R² and R3 together with the nitrogen atom to which they are attached form a saturated ring.

The dyes are applicable as acid dyes to natural and synthetic polyamide textile materials on which they give fast bright yellow shades.

## Description

This invention relates to water-soluble monoazo dyes and their application to polyamide textile materials.

According to the invention, there are provided water-soluble monoazo dyes which, in the form of the free acids, have the formula: 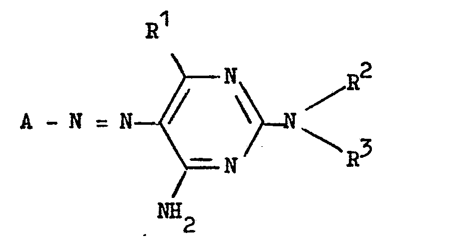 wherein A represents the residue of a diazo component of the benzene series containing a single sulphonic acid group and optionally one or more other substituents, R¹ represents hydrogen or lower alkyl and each of R and R³ independently represents hydrogen, optionally substituted alkyl or phenyl, or R² and R³ together with the nitrogen atom to which they are attached form a saturated ring.

The expressions "lower alkyl" and "lower alkoxy" used herein mean alkyl and alkoxy groups containing from one to four carbon atoms.

It is preferred that R¹ is hydrogen or methyl. The optionally substituted alkyl groups represented by R² and R³ are preferably optionally substituted lower alkyl groups. Examples of substituents which may be present on the alkyl groups include hydroxy, lower alkoxy, cyano and phenyl groups. It is preferred that each of R² and R³ independently is hydrogen or lower alkyl.

In one class of dyes of the invention, A is a sulphophenyl radical which may contain one or more other substituents, for example chlorine, bromine, cyano, nitro, carboxy, lower alkyl, lower alkoxy or acetylamino. Within this class, it is preferred that A is a sulphophenyl radical containing either one or two chlorine substituents, especially a radical of formula:

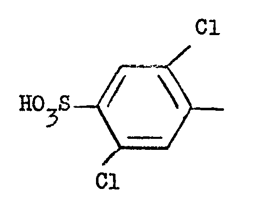

in a second class of dyes of the invention, A is a radical of the formula: 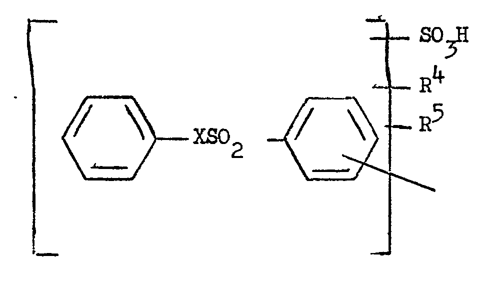 wherein R⁴ and R⁵ independently represent hydrogen, chlorine, lower alkyl or lower alkoxy and X represents -NH-, -CH₂-or especially -0-. Within this class, it is preferred that A is a radical of the formula:

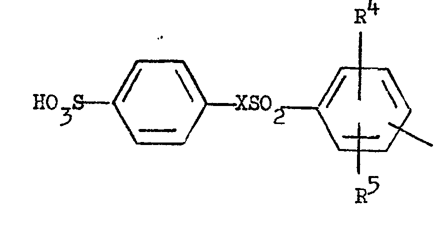

In other dyes of the invention, A may be a radical of the formula: 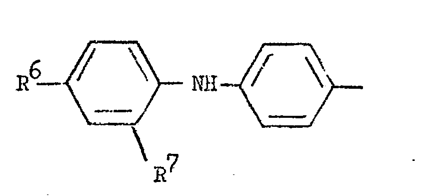 wherein one of R⁶ and R⁷ is sulpho and the other is nitro.

In further dyes of the invention, A may be a radical of the formula: 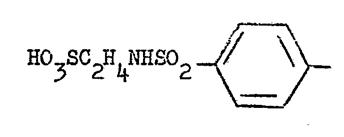 wherein the benzene ring contains one or more other substituents, especially chlorine atoms.

The dyes of the invention may be prepared by diazotising a monosulphonated optionally substituted aniline and coupling the diazo compound so obtained with a diaminopyrimidine of the formula: 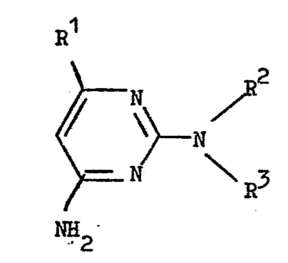 wherein R¹, R² and R³ have the meanings given above.

As examples of monosulphonated optionally substituted anilines there may be mentioned orthanilic, metanilic and sulphanilic acids and the various toluidine, anisidine, nitroaniline and aminoacetanilide sulphonic acids. Particularly important are the monosulphonated anilines containing one or two chlorine substituents, especially 2,5-dichloroaniline-4-sulphonic acid, 2,3-dichloroaniline-4-sulphonic acid, 2-chloroaniline-4-sulphonic acid and 2-chloroaniline-5-sulphonic acid. Other useful diazo components include phenoxysulphonylaniline and phenylaminosulphonylaniline sulphonic acids and nitrodiphenylamine sulphonic acids.

As examples of coupling components there may be mentioned 2-diethylamino-4-amino-6-methylpyrimidine, 2-ethylamino-4-aminopyrimidine, 2-anilino-4-amino-6-methylpyrimidine, 2-dibenzylamino-4-amino-6-methylpyrimidine, 2-(bis-hydroxyethylamino)-4-amino-6-methylpyrimidine and 2-(2-ethylhexylamino)-4-amino-6-methylpyrimidire.

The coupling components may be prepared by conventional methods. Thus, a substituted guanidine of the formula: 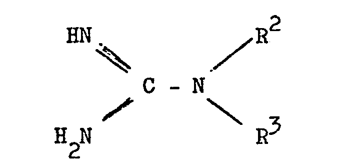 wherein R 2 and R ³ have the meanings given above, may be reacted with malic acid or ethyl acetoacetate to give, respectively, aminohydroxypyrimidines having the structures:

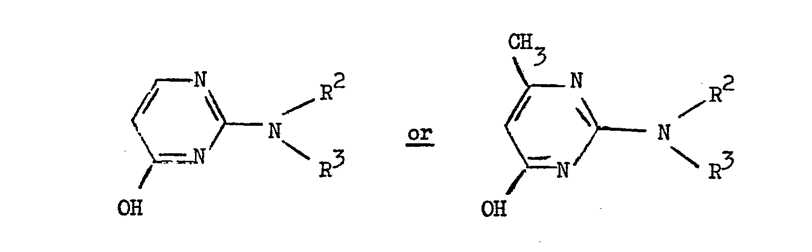

These products, when treated with a chlorinating agent such as phosphorus oxychloride, give the corresponding compounds in which the hydroxy group is replaced by chlorine and these compounds may be converted to the corresponding amino derivatives by reaction with ammonia.

The reactions leading to the formation of the dyes of the invention may be performed using conditions that have been fully described in the prior art for such reactions. Similarly, theses may be isolated by known methods and, as in the case of other dyes containing sulphonic acid groups, it is often convenient to isolate and use the dyes in the form of their water-soluble salts, particularly their alkali metal or ammonium salts and especially sodiua salts. Other useful salts include amine salts such as mono-, di- and triethanolamine salts. It is to be understood that the invention relates to both the free acids and their salts.

The dyes of the invention are suitable for applying to polyamide textile materials such as wool and silk but especially to synthetic polyamide textile materials, for example nylon 66 and nylon 6, using any of the general methods known for the application of acid dyes to such materials. The dyes are characterised by bright, strong, pure yellow shades. They are rapid dyeing aud are very compatible with other rapid dyeing dyes making them particularly suitable for use in mixture shades. The dyeings have excellent light fastness and good fastness to both wet and dry treatments.

When used in dyeing processes, the dyes of the invention are particularly notable for their excellent levelling properties on synthetic polyamide materials. In this respect, they are superior to closely related dyes described in United Kingdom Patent Specification No.1455194.

The invention is illustrated but not limited by the following Examples in which all parts and percentages are by weight.

### Example 1

2,5-dichloroaniline-4-sulphonic acid (9.3 parts) is dissolved in 250 parts of hot water containing 20 parts of 8% sodium hydroxide solution. After cooling to 0-5°C, 18 parts of 13.8% sodium nitrite solution are added followed by 10 parts of concentrated hydrochloric acid. After stirring for 11 hours, excess nitrite is removed by the addition of sulphamic acid. 5.4 parts of 2-diethylamino-4-amino-6-methylpyrimidine are dissolved in 25 parts of acetic acid containing ice and 10 parts of a surface active agent (Dispersol OG) and the diazonium salt solution is added. The pH is adjusted to 7 by the addition of sodium hydroxide solution whereupon coupling occurs rapidly. After ½ hour, the precipitated dye is filtered off, washed with cold water and dried.

The product dyes nylon fibres in a brilliant yellow shade having excellent fastness properties.

### Example 2

A dye having similar properties is obtained when the 2,5-dichloroaniline-γ-sulphonic acid of Example 1 is replaced by an equivalent amount of 2,3-dichloroaniline-4-sulphonic acid.

### Example 3

A dye having similar properties is obtained when the 2,5-dichloroaniline-4-sulphonic acid of Example 1 is replaced by an equivalent amount of 2-chloroaniline-4-sulphonic acid.

### Example 4

A dye having similar properties is obtained when the 2,5-dichloroaniline-4-sulphonic acid of Example 1 is replaced by an equivalent amount of 2-chloroaniline-5-sulphonic acid.

### Example 5

A dye having similar properties is obtained when the 2,5-dichloroaniline-4-sulphonic acid of Example 1 is replaced by an equivalent amount of 4-phenoxysulphonylaniline-4'-sulphonic acid.

Further Examples of dyes of the invention which may be prepared by methods analogous to that described in Example 1 are given in Tables 1 and 2.

The dyes listed in Table 1 have the structure: 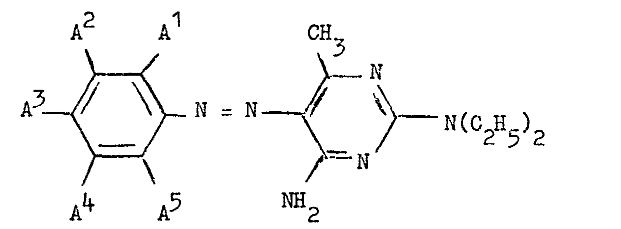 and are identified in the Table by the substituents A¹ - A⁵ When applied to nylon, the dyes give greenish-yellow shades except when otherwise stated.

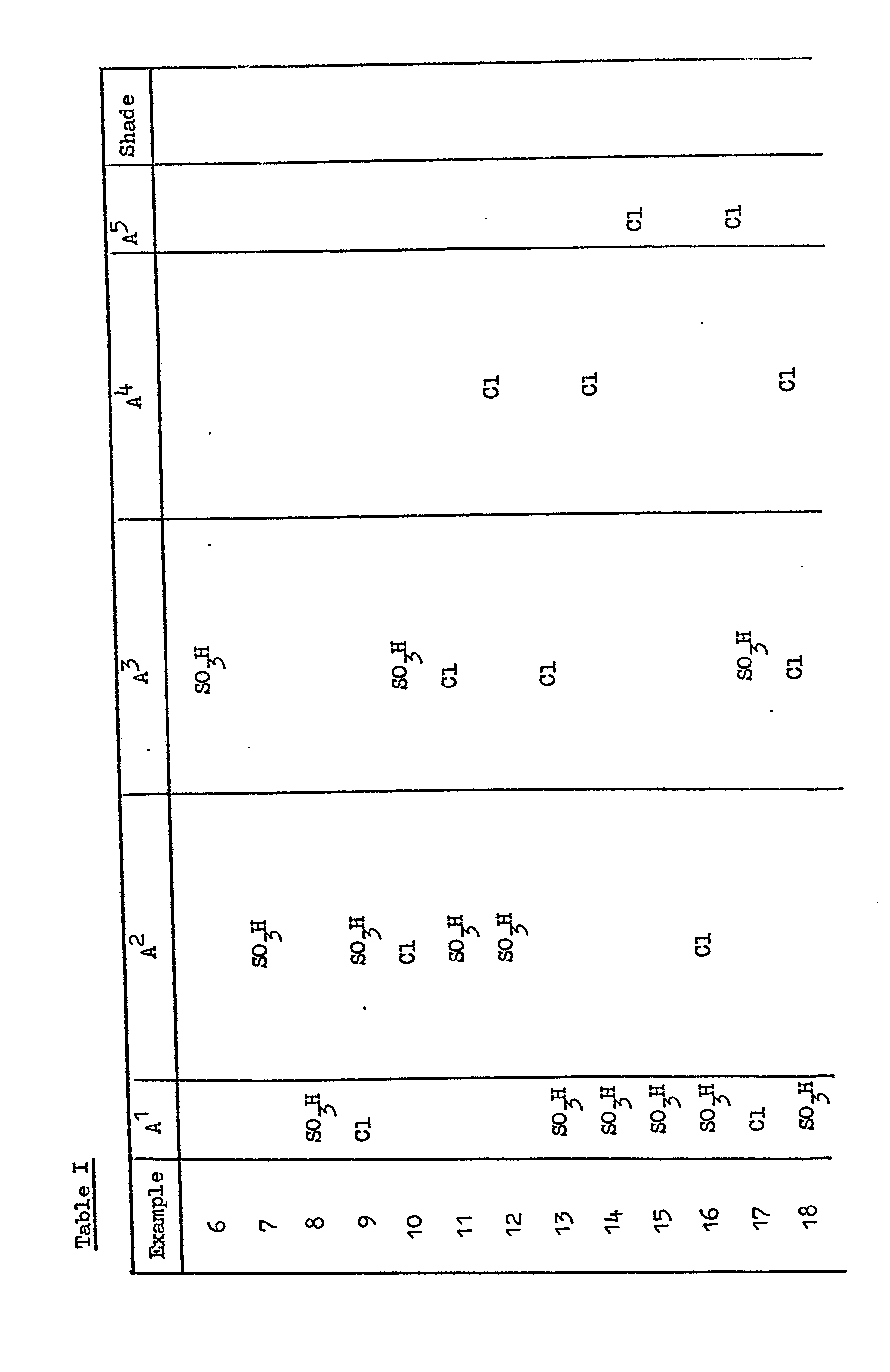

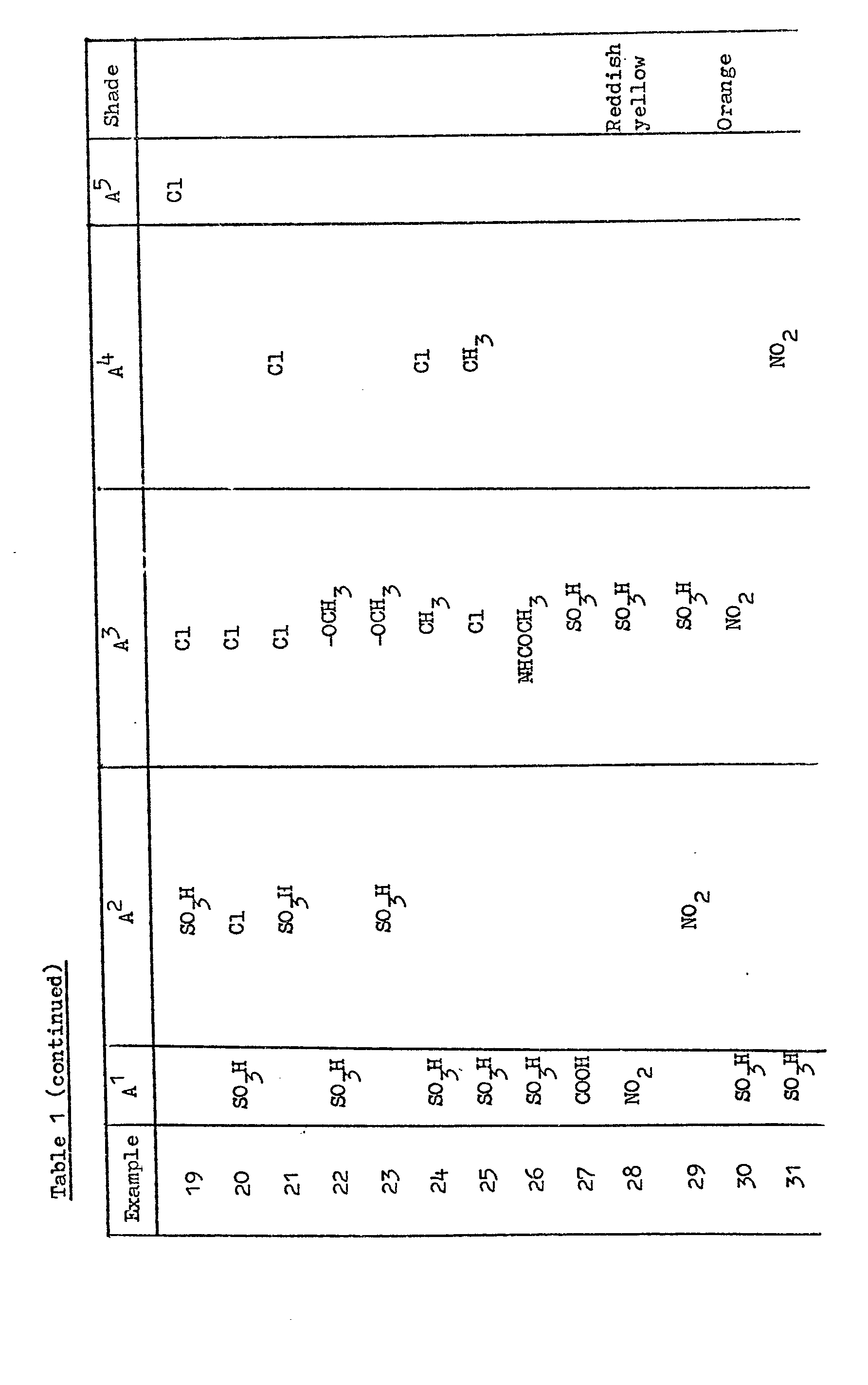

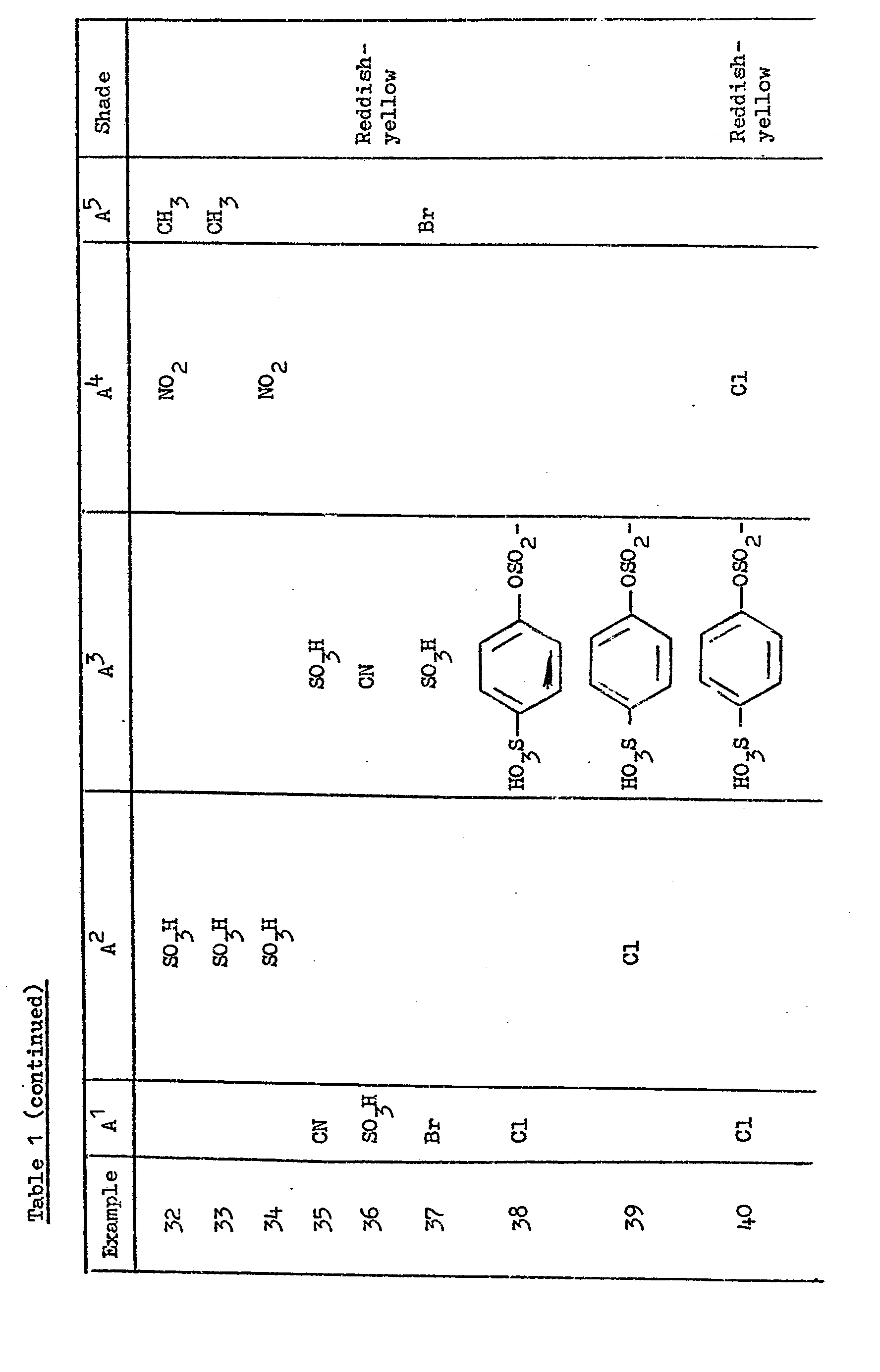

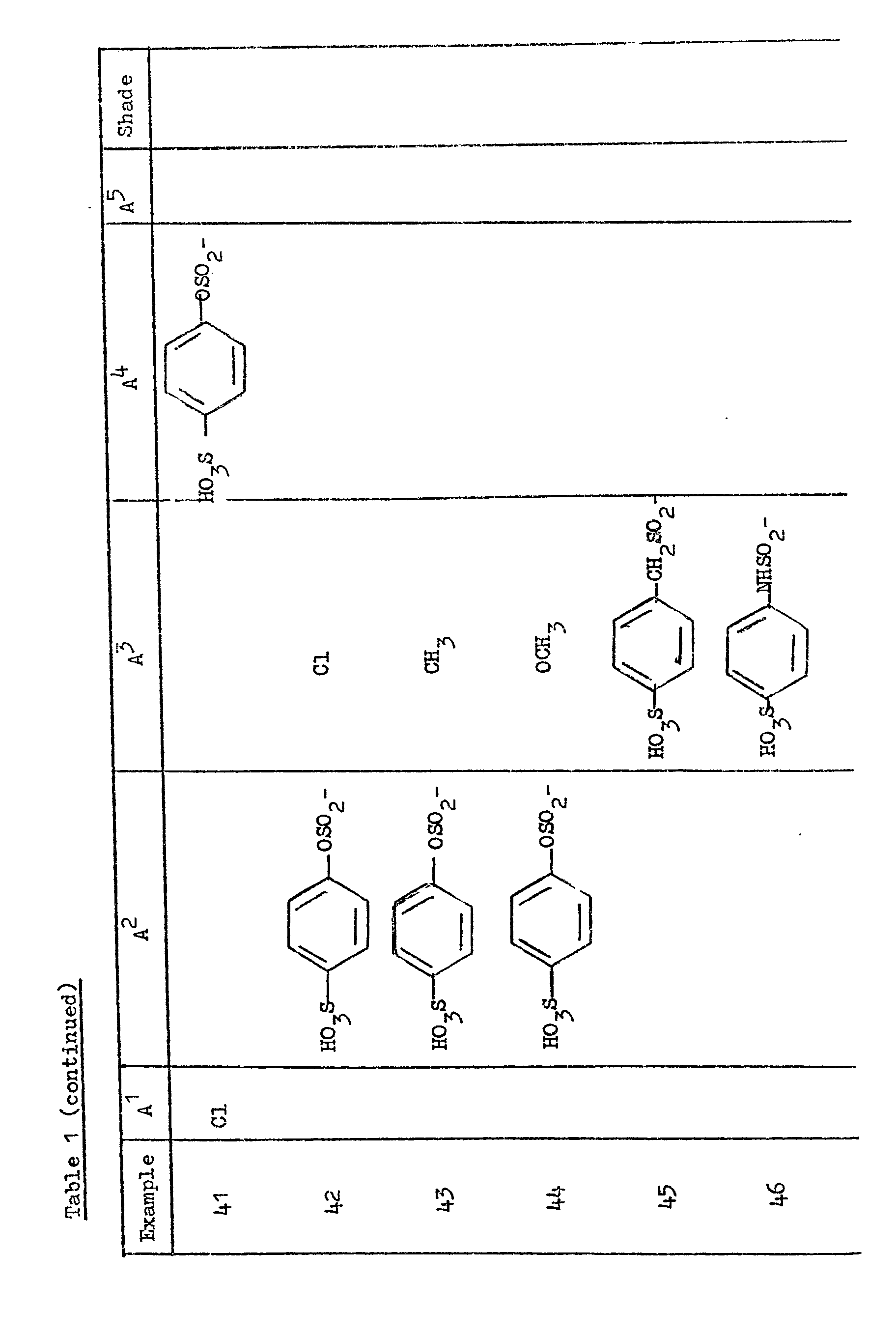

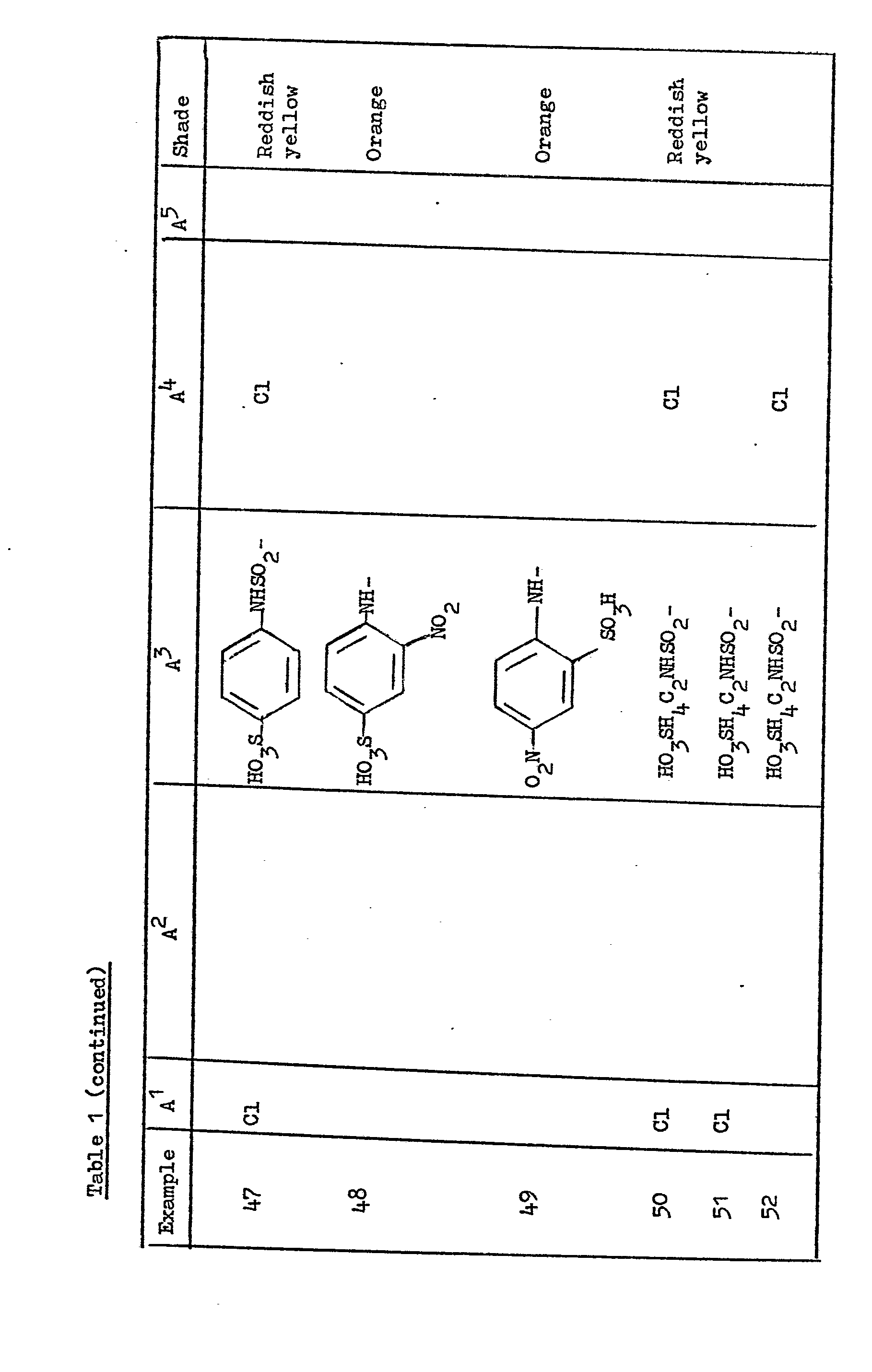

The dyes listed in Table 2 have the structure: 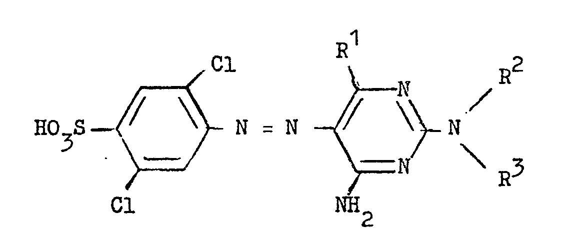 and are identified in the Table by the substituents R^{1 -} R³. When applied to nylon, the dyes give greenish yellow shades.

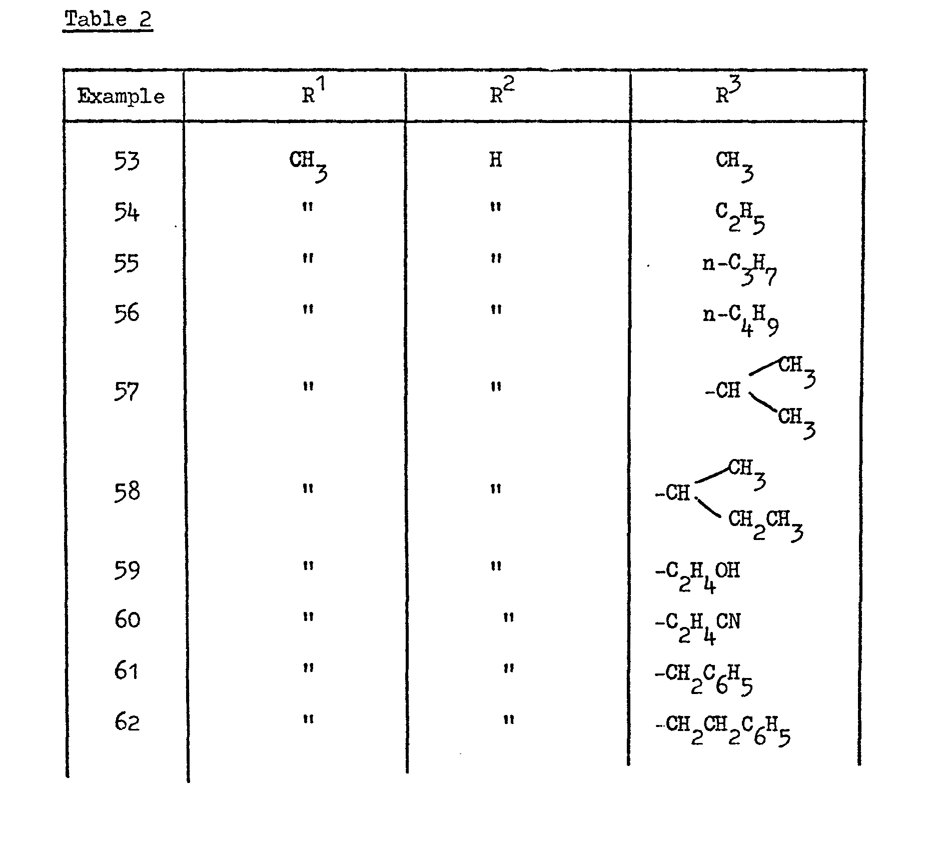

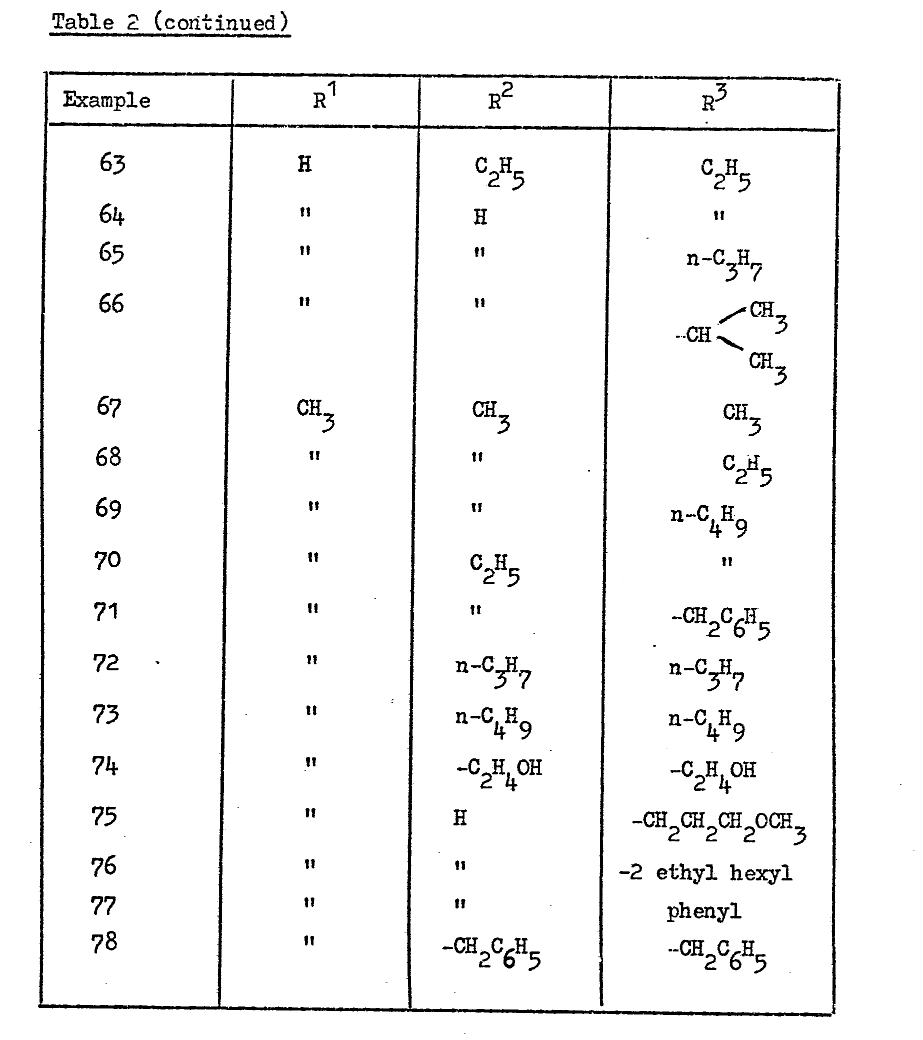

## Claims

1. A water-soluble monoazo dye which, in the form of the free acid, has the formula: 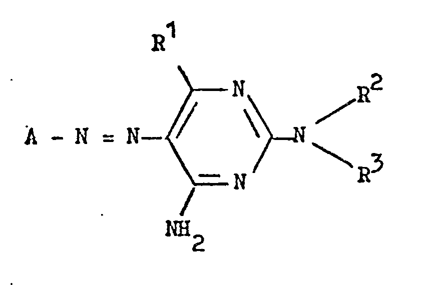 wherein A represents the residue of a diazo component of the benzene series containing a single sulphonic acid group and optionally one or more other substituents, R¹ represents hydrogen or lower alkyl and each of R and R³ independently represents hydrogen, optionally substituted alkyl or phenyl, or R² and R³ together with the nitrogen atom to which they are attached form a saturated ring.

2. A water-soluble monoazo dye according to claim 1 wherein R¹ is hydrogen or methyl.

3. A water soluble monoazo dye according to claim 1 or claim 2 wherein each of R² and R³,independently is hydrogen or lower alkyl. -

4. A water-soluble monoazo dye according to any one of the preceding claims wherein A is a sulphophenyl radical containing either one or two chlorine substituents.

5. A water-soluble monoazo dye according to claim 4 wherein A is a radical of the formula

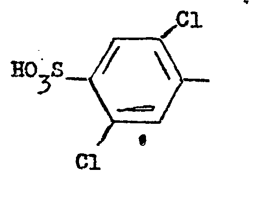

6. A water-soluble moncazo dye according to claim 5 having the formula:

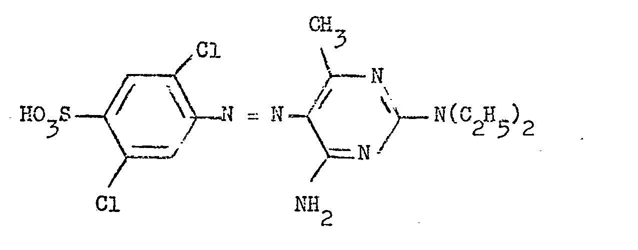

7. A method for the preparation, of water-soluble monoazo dye as defined in claim 1 which comprises diazotising a monosulphonated optionally substituted aniline and coupling the diazo compound so obtained with a diaminopyrimidine of the formula: 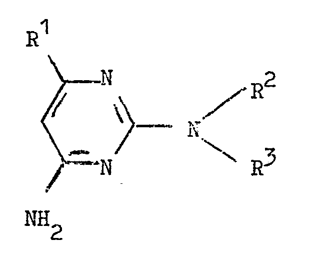 wherein R¹, R² and R³ have the meanings given in claim 1.

8. A process for the coloration of polyamide textile materials which comprises applying thereto a water-soluble monoazo dye as defined in claim 1.
